# FASCICULE DE BREVET EUROPEEN

(11) **EP 3 583 610 B1**
(45) Date de publication et mention de la délivrance du brevet: **30.12.2020**
(21) Numéro de dépôt: 18708919.8
(22) Date de dépôt: 14.02.2018
(51) Int. Cl.: G21C 17/07, G21C 19/07

(54) **DISPOSITIF ET PROCÉDÉ DE CONTRÔLE D'ÉTANCHÉITÉ PAR RESSUAGE D'UN ASSEMBLAGE DE COMBUSTIBLE NUCLÉAIRE**
VORRICHTUNG UND VERFAHREN ZUR VERSIEGELUNGSPRÜFUNG DURCH PENETRIERENDE INSPEKTION EINES KERNBRENNSTABBÜNDELS
DEVICE AND METHOD FOR SEAL VERIFICATION BY PENETRANT INSPECTION OF A NUCLEAR FUEL ASSEMBLY

(30) Priorité: 15.02.2017 FR 1751236
(43) Date de publication de la demande: 25.12.2019
(73) Titulaire: FRAMATOME, 92400 Courbevoie (FR)
(72) Inventeur: COUSTOURIER, Franck, 38460 Chamagnieu (FR); ROILLET, Serge, 69007 Lyon (FR)
(74) Mandataire: Lavoix
(86) Numéro de dépôt international: PCT/EP2018/053680
(87) Numéro de publication internationale: WO 2018/149876

(56) Documents cités:
- DE-A1- 19 924 066
- JP-A- 2013 061 199

## Description

La présente invention concerne un dispositif et un procédé de contrôle d'étanchéité d'un assemblage de combustible nucléaire par ressuage.

Un réacteur nucléaire comprend une cuve dans laquelle est disposée une pluralité d'assemblages de combustible nucléaire formant ensemble le cœur du réacteur nucléaire. La cuve possède un couvercle amovible qu'il faut retirer pour charger et décharger les assemblages de combustible nucléaire.

Le réacteur nucléaire est généralement disposé dans un puits de réacteur rempli d'eau lorsque le réacteur est à l'arrêt, le puits communiquant avec au moins une piscine également remplie d'eau permettant de réaliser les opérations de maintenance.

Chaque assemblage de combustible nucléaire contient du combustible nucléaire. Plus précisément, chaque assemblage de combustible nucléaire comprend un faisceau de crayons de combustible nucléaire, chaque crayon de combustible nucléaire comprenant une gaine tubulaire allongée fermée à ses deux extrémités et contenant du combustible nucléaire.

En fonctionnement, un fluide de refroidissement circule à travers le cœur, le long des assemblages de combustible nucléaire, et en particulier le long de leurs crayons de combustible nucléaire. Le fluide de refroidissement maintient le cœur à une température de fonctionnement et joue également le rôle de modérateur pour la réaction nucléaire.

Au cours de son exploitation en réacteur nucléaire, un crayon de combustible nucléaire d'un assemblage de combustible nucléaire peut perdre son intégrité et présenter un défaut d'étanchéité par exemple par percement ou fissuration de la gaine du crayon. Un tel défaut d'étanchéité laisse s'échapper des produits de fission résultant de la réaction nucléaire, notamment des gaz de fission (xénon, krypton) et des composants iodés. Ces produits de fission se mélangent au fluide de refroidissement et peuvent venir se déposer sur les éléments constituant le réacteur nucléaire, augmentant ainsi le niveau de radioactivité de l'installation.

Les gaines des crayons des assemblages de combustible nucléaire constituent la première « barrière » de confinement des produits de fission. En exploitation, la surveillance de l'étanchéité des crayons des assemblages de combustible nucléaire chargés en réacteur nucléaire est réalisée par des mesures régulières de la radioactivité présente dans le fluide de refroidissement. Les mesures des activités en gaz et en composants iodés permettent de détecter un défaut d'étanchéité et sont utilisées pour estimer le nombre de crayons affectés, leur taux de combustion, leur emplacement dans le cœur et la taille du ou des défauts. Cependant, ces mesures ne permettent pas de déterminer quel assemblage de combustible nucléaire contient un crayon de combustible présentant un défaut d'étanchéité. Cette détermination a lieu par contrôle individuel des assemblages de combustible nucléaire irradiés potentiellement affectés lorsque le réacteur est à l'arrêt et pour ce faire le couvercle de la cuve du réacteur nucléaire est retiré.

Pour détecter un éventuel défaut d'étanchéité d'un assemblage de combustible nucléaire irradié, il est possible de réaliser un contrôle d'étanchéité par ressuage (ou « *sipping* » en anglais).

Un contrôle d'étanchéité par ressuage consiste à provoquer une augmentation relative de la pression interne des crayons de combustible nucléaire d'un assemblage de combustible nucléaire par rapport à la pression extérieure. Comme les pressions à l'intérieur et à l'extérieur du crayon de combustible tendent à s'équilibrer naturellement, il se produit un transfert des produits de fission qui sont essentiellement sous forme gazeuse de l'intérieur du crayon vers l'extérieur. L'augmentation relative de la pression interne des crayons de combustible est par exemple obtenue en provoquant une augmentation de la température de l'assemblage de combustible nucléaire ou une diminution de la pression extérieure.

Il est possible de réaliser un contrôle d'étanchéité par ressuage *in situ*, i.e. dans le réacteur nucléaire (« *in-core sipping* » en anglais). Le contrôle d'étanchéité par ressuage in-situ est réalisé sur les assemblages de combustible nucléaire en position dans le cœur du réacteur nucléaire. Des exemples de dispositifs de contrôle d'étanchéité par ressuage *in situ* sont divulgués dans les documents US3856620A, US4082607A, US4248666A, EP1183692B1 et EP1810297B1.

Toutefois, le contrôle d'étanchéité par ressuage réalisé in-situ sur un assemblage de combustible nucléaire peut être perturbé ou parasité par la présence d'éventuels produits de fission piégés dans le fluide de refroidissement et/ou provenant d'assemblages voisins. Par ailleurs, ce contrôle d'étanchéité n'est rendu possible que pour des assemblages de combustible nucléaire comportant un boîtier entourant le faisceau de crayons de l'assemblage de combustible et jouant le rôle de cellule de ressuage, comme c'est le cas pour les assemblages de combustible nucléaire des réacteurs à eau bouillante (Boiling Water Reactor ou BWR). Ainsi, de tels dispositifs de ressuage n'ont qu'une efficacité très limitée pour des assemblages de combustible nucléaire ne comportant pas de boîtier, notamment les assemblages de combustible nucléaire pour réacteur à eau pressurisée (Pressurized Water Reactor ou PWR).

Il est possible de réaliser un contrôle d'étanchéité par ressuage pendant le déchargement d'un assemblage de combustible nucléaire hors du cœur, à l'aide d'une machine de chargement munie d'un appareil de ressuage, telle que décrite dans EP1183692B1. En effet, du fait de son déchargement, l'assemblage de combustible nucléaire est généralement remonté à une profondeur inférieure à celle du réacteur nucléaire, de sorte que la pression à l'extérieur de l'assemblage de combustible nucléaire diminue, ce qui provoque un relâchement de produits de fission hors d'un crayon de combustible nucléaire présentant une perte d'étanchéité. Sont notamment relâchés des produits de fissions gazeux et de l'eau contenant des produits de fission dissous et/ou sous forme de particules en suspension, permettant ainsi d'effectuer un contrôle par ressuage.

Cependant, dans certains cas, notamment lorsque l'appareil de ressuage est contaminé par des produits de fission relâchés par un assemblage de combustible nucléaire précédemment contrôlé, cette machine de chargement ne permet pas de déterminer avec certitude si un assemblage de combustible nucléaire présente une perte d'étanchéité ou non, et l'assemblage de combustible nucléaire peut seulement être classé comme « douteux ». Il convient alors de réaliser un contrôle d'étanchéité par ressuage dans une cellule de ressuage dédiée pour confirmer la perte d'étanchéité.

Un contrôle d'étanchéité par ressuage peut être effectué dans une cellule de ressuage dédiée au ressuage et disposée dans une piscine en communication avec le puits de réacteur dans lequel est situé le réacteur nucléaire. La cellule de ressuage comprend un ou plusieurs logements pour la réception du ou des assemblages de combustible nucléaire à contrôler. De telles cellules de ressuage sont divulguées dans les documents US4072559A, US4039376A et JP5726688B2.

Il est possible de prévoir des cellules de ressuage fixes. Cependant, dans les centrales nucléaires anciennes, ces cellules de ressuage sont également anciennes, et leur maintenance et leur mise à jour sont coûteuses.

Il est possible de prévoir des cellules de ressuage mobiles qu'il est possible d'installer spécialement dans la piscine pendant des opérations de maintenance du réacteur nucléaire et de désinstaller une fois les opérations de maintenance terminées. Cependant, de telles cellules de ressuage sont généralement encombrantes, lourdes, et longues à installer, à décontaminer et à désinstaller.

Dans tous les cas, le contrôle d'étanchéité par ressuage de chaque assemblage de combustible nucléaire potentiellement affecté impose de manutentionner l'assemblage de combustible nucléaire jusqu'à une cellule de ressuage, de réaliser le contrôle d'étanchéité par ressuage, de manutentionner à nouveau l'assemblage de combustible nucléaire hors de la cellule de ressuage, de rincer et, éventuellement, de décontaminer la cellule de ressuage avant insertion d'un assemblage de combustible nucléaire suivant. A la fin des contrôles d'étanchéité par ressuage, il convient en outre de décontaminer la cellule de ressuage. Ceci impose donc de nombreuses opérations de manutention des assemblages de combustible nucléaire, qui sont longues à réaliser et augmentent le risque d'endommager un assemblage de combustible nucléaire.

En outre, les cellules de ressuage prennent de la place dans la piscine. Elles doivent être compatibles avec leur environnement (points d'ancrage...) et doivent être conçues pour le fonctionnement normal et en cas d'incident, notamment en cas de séisme. De telles cellules de ressuage représentent un investissement coûteux au regard de l'utilisation épisodique qui en est faite.

Un but de l'invention est de proposer un dispositif de ressuage permettant de réaliser des contrôles d'étanchéité par ressuage sur des assemblages de combustible nucléaire de manière simple, rapide, peu coûteuse, en réduisant voire supprimant les opérations de manutention supplémentaires de ces assemblages et en limitant les effets parasites pouvant fausser le résultat du contrôle d'étanchéité de par la présence d'assemblages adjacents.

A cet effet, l'invention propose un dispositif de contrôle d'étanchéité selon la revendication 1. Des caractéristiques optionnelles du dispositif de contrôle d'étanchéité sont définies aux revendications 2 à 8.

L'invention a également pour objet un procédé de contrôle de l'étanchéité selon la revendication 9. Des caractéristiques optionnelles du procédé de contrôle de l'étanchéité sont définies aux revendications 10 à 12.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique d'une centrale nucléaire illustrant un réacteur nucléaire et un dispositif de contrôle d'étanchéité par ressuage pour le contrôle de l'étanchéité d'assemblages de combustible nucléaire ;
- la Figure 2 est une vue schématique du dispositif de contrôle d'étanchéité par ressuage et d'une portion d'un rack de stockage d'assemblages de combustible nucléaire déchargés du réacteur nucléaire ;
- la Figure 3 est une vue analogue à celle de la Figure 2 illustrant un dispositif de contrôle d'étanchéité par ressuage selon une variante ; et
- la Figure 4 est une vue partielle d'un dispositif de contrôle d'étanchéité par ressuage selon une variante, illustrant une unité de chauffage et un dispositif de bullage de ce dispositif de contrôle d'étanchéité par ressuage.

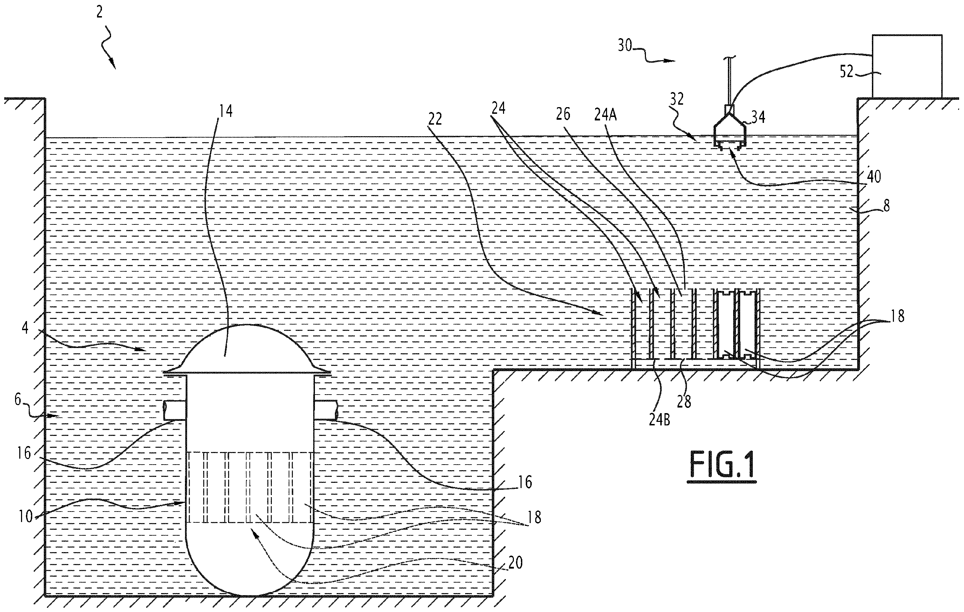

La centrale nucléaire 2 illustrée sur la Figure 1 comprend un réacteur nucléaire 4 disposé dans un puits de réacteur 6, et une piscine de stockage 8 pour le stockage d'assemblages de combustible nucléaire 18 déchargés du réacteur nucléaire 4. La piscine de stockage 8 est en communication avec le puits de réacteur 6.

Le puits de réacteur 6 et la piscine de stockage 8 sont remplis d'eau pour assurer la protection radiologique de l'ensemble. Le niveau de l'eau est prévu pour que les manutentions nécessaires lors d'opérations de maintenance, et notamment la manutention des assemblages de combustible nucléaire 18, soient effectuées sous eau.

Le réacteur nucléaire 4 comprend une cuve 10 et un couvercle 14 monté amovible sur la cuve 10. La cuve 10 est reliée à un circuit primaire par des tubulures 16 pour la circulation d'un fluide de refroidissement à travers la cuve 10.

Le réacteur nucléaire 4 est chargé d'un ensemble d'assemblages de combustible nucléaire 18 disposés côte à côte et formant ensemble le cœur 20 du réacteur nucléaire 4. Pour le chargement et le déchargement des assemblages de combustible nucléaire 18, le couvercle 14 de la cuve 10 est retiré, afin de libérer l'accès à l'intérieur de la cuve 10.

La centrale nucléaire 2 comprend un ou plusieurs racks de stockage 22 disposés dans la piscine de stockage 8 et configurés notamment pour le stockage d'assemblages de combustible nucléaire 18 déchargés du réacteur nucléaire 4, en particulier lors d'opérations de maintenance du réacteur nucléaire 4.

Un rack de stockage 22 comprend une pluralité d'alvéoles 24 tubulaires individuels, chaque alvéole 24 étant configuré pour recevoir un assemblage de combustible nucléaire 18 respectif.

Chaque alvéole 24 est allongé verticalement. Chaque alvéole 24 possède une extrémité supérieure 24A et une extrémité inférieure 24B.

Chaque alvéole 24 possède une ouverture supérieure 26 située à l'extrémité supérieure 24A de l'alvéole 24 et une ouverture inférieure 28 située à l'extrémité inférieure 24B de l'alvéole 24.

L'ouverture supérieure 26 est dimensionnée pour l'insertion et l'extraction d'un assemblage de combustible nucléaire 18 verticalement. L'ouverture inférieure 28 est ménagée dans un fond configuré pour supporter un assemblage de combustible nucléaire 18 reçu dans l'alvéole 24.

L'ouverture inférieure 28 et l'ouverture supérieure 26 permettent la circulation d'eau du bas vers le haut à travers l'alvéole 24 par convection. Lorsqu'un assemblage de combustible nucléaire 18 est reçu dans l'alvéole 24, cette circulation permet une régulation de la température de l'assemblage de combustible nucléaire 18.

Chaque alvéole 24 présente une hauteur suffisante pour qu'un assemblage de combustible nucléaire 18 inséré dans un alvéole 24 soit entièrement contenu dans l'alvéole 24.

Au cours d'opérations de maintenance et de rechargement en combustible du réacteur nucléaire 4, tous les assemblages de combustible nucléaire 18 du réacteur nucléaire 4 sont déchargés. Lorsque la présence de produits de fission a été préalablement détectée dans le fluide de refroidissement du réacteur nucléaire 4, un examen est effectué pour contrôler l'étanchéité des assemblages de combustible nucléaire 18 potentiellement affectés. En effet, pour des raisons de sûreté et de propreté radiologique du réacteur nucléaire 4, un assemblage de combustible nucléaire 18 présentant un défaut d'étanchéité ne peut être rechargé dans le réacteur nucléaire 4.

La centrale nucléaire 2 est équipée d'un dispositif de contrôle d'étanchéité 30 configuré pour la réalisation de contrôle d'étanchéité par ressuage sur les assemblages de combustible nucléaire 18.

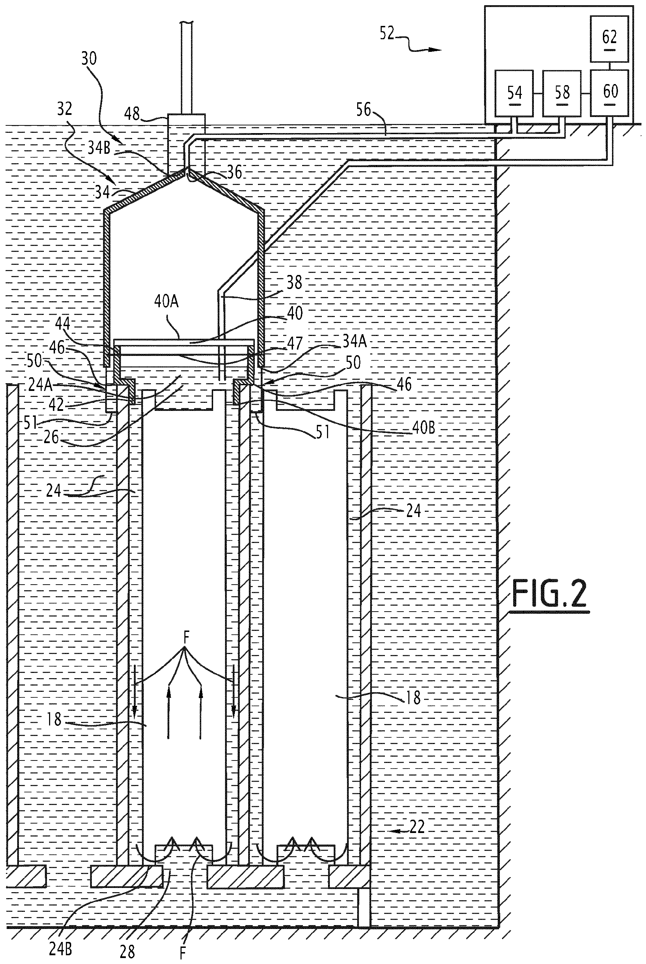

Tel qu'illustré sur les Figures 1 et 2, le dispositif de contrôle d'étanchéité 30 est configuré pour la réalisation de contrôles d'étanchéité par ressuage sur des assemblages de combustible nucléaire 18 stockés dans des alvéoles 24 du rack de stockage 22.

Le dispositif de contrôle d'étanchéité 30 comprend un ensemble de collecte 32 configuré pour être disposé à l'extrémité supérieure 24A d'un alvéole 24 du rack de stockage 22, l'ensemble de collecte 32 étant configuré pour fermer l'extrémité supérieure 24A de l'alvéole 24 de manière à empêcher la sortie d'eau par l'extrémité supérieure 24A de l'alvéole 24 et pour collecter des éventuels produits de fission gazeux relâchés par un assemblage de combustible nucléaire 18 reçu dans l'alvéole 24.

La fermeture de l'extrémité supérieure 24A de l'alvéole 24 permet de provoquer une augmentation de la température d'un assemblage de combustible nucléaire 18 irradié stocké dans l'alvéole 24, du fait de sa puissance résiduelle. Cette puissance est produite principalement par la radioactivité du combustible nucléaire contenu dans l'assemblage de combustible nucléaire 18 ainsi que par les fissions résiduelles. Un contrôle de ressuage est plus efficace lorsqu'il est effectué immédiatement après transfert de l'assemblage de combustible nucléaire 18 du réacteur nucléaire 4 vers l'alvéole 24, la puissance résiduelle de l'assemblage de combustible nucléaire 18 étant alors encore élevée.

L'ensemble de collecte 32 comprend un couvercle 34 pour fermer l'extrémité supérieure 24A de l'alvéole 24 et pour collecter des éventuels produits de fission gazeux relâchés par un assemblage de combustible nucléaire 18 reçu dans l'alvéole 24.

Le couvercle 34 présente la forme d'une cloche. Le couvercle 34 délimite un volume interne. Le couvercle 34 présente un bord inférieur 34A et un sommet 34B. De préférence, le couvercle 34 présente une forme convergente sur tout ou partie de sa hauteur. La partie supérieure du couvercle 34 présente ici une forme pyramidale ou conique convergeant vers le sommet 34B.

Le couvercle 34 comprend au moins un piquage pour collecter des gaz présents sous le couvercle 34. Le piquage pour la collecte de gaz est de préférence situé à proximité du sommet 34B.

Le couvercle 34 comprend au moins un piquage situé sur le couvercle 34 et permettant d'alimenter le couvercle 34 en gaz sous pression, par exemple en air sous pression.

Le couvercle 34 rempli d'air sous pression et situé au-dessus de l'alvéole 24 permet de limiter encore plus la circulation de l'eau dans l'alvéole 24, dans la mesure où l'eau ne peut circuler dans le couvercle 34. En revanche des produits de fission gazeux peuvent s'échapper de l'eau et être collectés par le couvercle 34.

Dans l'exemple illustré, le couvercle 34 comprend un piquage 36 pour réaliser à la fois la collecte de gaz piégés par le couvercle 34 et l'amenée de gaz sous pression sous le couvercle 34. En variante, le couvercle 34 comprend des piquages distincts pour la collecte des gaz et pour l'injection de gaz sous pression.

En option, le couvercle 34 porte une sonde de température 38 configurée pour mesurer la température de l'eau contenue dans l'alvéole 24 sur lequel est disposé le dispositif de ressuage. La sonde de température 38 est par exemple configurée pour plonger dans l'eau contenue dans l'alvéole 24 lorsque l'ensemble de collecte 32 est disposé sur l'extrémité supérieure 24A de l'alvéole 24.

En option, le couvercle 34 comprend un piquage configuré pour le prélèvement d'eau dans l'alvéole 24 sur lequel est disposé l'ensemble de collecte 32.

Le couvercle 34 est par exemple formé d'un ensemble mécano-soudé en acier inoxydable, en particulier en acier AISI 304, 304L, 316 ou 316L.

Dans l'exemple illustré, l'ensemble de collecte 32 comprend un prolongateur 40 tubulaire configuré pour être disposé à l'extrémité supérieure 24A d'un alvéole 24 de manière à le prolonger vers le haut.

Le prolongateur 40 permet de prolonger l'alvéole 24 au-delà du bord supérieur d'alvéoles 24 adjacents. En position de fonctionnement, le prolongateur 40 fait saillie par rapport aux alvéoles 24 adjacents. En particulier, le prolongateur 40 présente un bord supérieur 40A situé à un niveau supérieur à celui des extrémités supérieures 24A des alvéoles 24 adjacents.

Dans l'exemple illustré, le prolongateur 40 est configuré pour s'enfoncer partiellement dans l'alvéole 24. Le prolongateur 40 présente une portion inférieure 42 configurée pour être emboîtée dans l'alvéole 24, et une portion supérieure 44 prévue pour faire saillie vers le haut à partir de l'alvéole 24 lorsque le prolongateur 40 est emboîté dans l'alvéole 24.

Le prolongateur 40 présente un épaulement externe 46 à la jonction entre la portion inférieure 42 et la portion supérieure 44. L'épaulement externe 46 forme une butée limitant l'enfoncement de l'extrémité inférieure 40B du prolongateur 40 à l'intérieur de l'alvéole 24.

L'emboîtement du prolongateur 40 dans l'alvéole 24 assure un positionnement horizontal correct du prolongateur 40 par rapport à l'alvéole 24. Par ailleurs, l'épaulement externe 46 assure un positionnement vertical correct.

Le prolongateur 40 est par exemple formé d'un ensemble mécano-soudé en acier inoxydable, en particulier en acier AISI 304, 304L, 316 ou 316L.

Le couvercle 34 est configuré pour coiffer le prolongateur 40. Le couvercle 34 et le prolongateur 40 coopèrent ainsi efficacement pour fermer l'extrémité supérieure 24A de l'alvéole 24 et collecter les gaz provenant de l'alvéole 24.

En particulier, le prolongateur 40 est en partie engagé à l'intérieur du couvercle 34. Le bord inférieur 34A du couvercle 34 est situé à un niveau inférieur à celui du bord supérieur 40A du prolongateur 40.

Avec cette configuration, lorsque l'ensemble de collecte 32 est installé à l'extrémité supérieure 24A d'un alvéole 24 et que le couvercle 34 est rempli de gaz sous pression, le volume de gaz sous pression peut descendre à un niveau inférieur à celui du bord supérieur 40A du prolongateur 40. L'eau contenue dans l'alvéole 24 est ainsi empêchée de sortir par le haut de l'alvéole 24, et donc de traverser l'alvéole 24. Ceci est obtenu sans que le bord inférieur 34A du couvercle 34 n'interfère avec les extrémités supérieures 24A des alvéoles 24 adjacents.

Comme illustré par les flèches F, l'eau contenue dans l'alvéole 24 circule éventuellement en boucle fermée dans l'alvéole 24.

Le bord inférieur 34A du couvercle 34 est de dimensions plus grandes que celles du bord supérieur 40A du prolongateur 40 de façon que le prolongateur 40 puisse s'engager à l'intérieur du couvercle 34.

De préférence, le bord inférieur 34A du couvercle 34 se situe à une altitude plus élevée que l'extrémité supérieure de l'assemblage de combustible nucléaire 18. Cette disposition permet de garantir que l'assemblage de combustible nucléaire 18 reste toujours entouré d'eau et donc de satisfaire le critère de sûreté nucléaire imposant la présence d'eau pour éviter tout échauffement incontrôlé de l'assemblage de combustible nucléaire 18.

Dans un mode de réalisation particulier, le couvercle 34 et le prolongateur 40 sont solidaires l'un de l'autre, de manière à être manipulables conjointement, comme une seule unité. L'ensemble de collecte 32 est donc unitaire. Le couvercle 34 et le prolongateur 40 sont ici reliés par une tige horizontale 47 traversant le couvercle 34 et le prolongateur 40. En option, le couvercle 34 et le prolongateur 40 peuvent constituer un seul et même ensemble mécano-soudé ou boulonné.

L'ensemble de collecte 32 comprend un système de manutention 48 pour manipuler l'ensemble de collecte 32. Le système de manutention 48 est ici disposé sur le couvercle 34. Le système de manutention 48 est par exemple configuré pour être saisissable à l'aide d'outils de manutention prévus pour la manutention des assemblages de combustible nucléaire. Ainsi, les outils de manutention déjà prévus pour la manutention des assemblages de combustible nucléaire permettent de manutentionner l'ensemble de collecte 32 sans avoir à prévoir des outils de manutention spécifiques.

En option, l'ensemble de collecte 32 comprend un dispositif de maintien 50 pour maintenir l'ensemble de collecte 32 en position installée sur un alvéole 24. Le dispositif de maintien 50 comprend par exemple un lest. Le lest exerce une force verticale permanente retenant l'ensemble de collecte 32 sur l'alvéole 24. En variante ou en complément, le dispositif de maintien comprend un système de verrouillage 51 mécanique. Un tel système de verrouillage 51 comprend par exemple un ou plusieurs crochet(s) ou loquet(s) prévu(s) pour venir en prise avec le rack de stockage 22. Un tel système de verrouillage 51 est par exemple actionnable à distance à l'aide de perches.

Le dispositif de contrôle d'étanchéité 30 comprend un ensemble de commande 52 séparé et distant de l'ensemble de collecte 32.

Comme cela est illustré sur la Figure 2, l'ensemble de commande 52 est prévu pour être placé sur le bord de la piscine de stockage 8 et est relié à l'ensemble de collecte 32, par exemple par des conduits 56 et/ou des câbles.

L'ensemble de commande 52 comprend une source de gaz sous pression 54, par exemple d'air sous pression, reliée au piquage 36 du couvercle 34 par un conduit 56, pour alimenter le couvercle 34 en gaz sous pression.

L'ensemble de commande 52 comprend un dispositif de mesure 58 relié à un piquage 36 du couvercle 34 par un conduit 56 pour collecter des gaz piégés par le couvercle 34, et configuré pour réaliser des mesures sur des gaz collectés par le couvercle 34.

Le dispositif de mesure 58 est par exemple configuré pour mesurer des rayonnements émis par les gaz collectés, par exemple des rayonnements gamma et/ou des rayonnements beta. Le dispositif de mesure 58 est par exemple configuré pour réaliser des mesures de comptage de rayonnements.

L'ensemble de commande 52 comprend un calculateur 60 configuré pour analyser les signaux de mesure fournis par le dispositif de mesure 58. Le calculateur 60 est de préférence configuré pour déterminer la présence éventuelle de produits de fission gazeux dans les gaz collectés en fonction des signaux de mesure fournis par le dispositif de mesure 58.

L'ensemble de commande 52 comprend un dispositif d'interface homme-machine 62 configuré pour restituer à un utilisateur le résultat d'analyses fourni par le calculateur 60. Le dispositif d'interface homme-machine 62 comprend par exemple un écran d'affichage tactile ou non, un clavier, un dispositif de pointage, un pavé tactile et/ou une imprimante.

En option, le calculateur 60 est configuré pour tenir compte d'un signal de mesure de température fourni par une sonde de température 38 équipant l'ensemble de collecte 32 et/ou pour restituer la température à l'utilisateur via le dispositif d'interface homme-machine 62. La connaissance de la température permet de surveiller que le ressuage est effectué dans des conditions sûres, sans ébullition de l'eau contenue dans l'alvéole 24.

En option, le dispositif de mesure 58 est configuré pour la détection de produits de fission solides et/ou gazeux dissous et/ou de produits de fission en suspension dans de l'eau prélevée dans l'alvéole 24 à l'aide de l'ensemble de collecte 32. La détection des produits de fission dissous ou en suspension est réalisée par exemple par des mesures de comptage de rayonnements gamma à l'aide d'un spectromètre. La détection de produits de fission dissous et/ou en suspension dans l'eau permet d'améliorer l'efficacité de la détection.

Un procédé de contrôle d'étanchéité par ressuage mis en oeuvre à l'aide du dispositif de contrôle d'étanchéité 30 est décrit ci-dessous.

Les assemblages de combustible nucléaire 18 irradiés sont déchargés du réacteur nucléaire 4 et insérés chacun dans un alvéole 24.

En parallèle et au fur et à mesure du déchargement du réacteur nucléaire 4, l'ensemble de collecte 32 est installé à l'extrémité supérieure 24A d'un premier alvéole 24. Pour ce faire, la portion inférieure 42 du prolongateur 40 est engagée dans l'alvéole 24. Le cas échéant, un système de verrouillage 51 est activé pour maintenir l'ensemble de collecte 32 solidaire de l'alvéole 24. L'ensemble de collecte 32 est alors dans la position de la Figure 2. Le prolongateur 40 est disposé à l'extrémité supérieure 24A de l'alvéole 24 de manière à le prolonger verticalement vers le haut et le couvercle 34 coiffe le prolongateur 40.

Du gaz sous pression est envoyé dans le couvercle 34. Le gaz sous pression chasse l'eau présente dans le couvercle 34. Une poche de gaz est emprisonnée sous le couvercle 34 et empêche l'eau contenue dans l'alvéole 24 de sortir par l'ouverture supérieure 26 de celui-ci. Le gaz sous pression est injecté sous le couvercle 34 à l'aide de la source de gaz sous pression 54 reliée au couvercle 34 par le conduit 56.

L'eau présente dans l'alvéole 24 chauffe progressivement du fait de la puissance résiduelle de l'assemblage de combustible nucléaire 18. La présence du couvercle 34 empêche l'eau de sortir de l'alvéole 24 comme elle le ferait par convection en l'absence du couvercle 34. Ainsi, l'assemblage de combustible nucléaire 18 est moins refroidi et sa température augmente.

L'eau présente dans l'alvéole 24 circule éventuellement en boucle fermée dans l'alvéole 24 du fait de la convection. Elle se réchauffe en circulant vers le haut le long de l'assemblage de combustible nucléaire 18 et redescend le long des parois de l'alvéole 24.

Du fait de l'augmentation de température, la pression à l'intérieur des crayons de combustible nucléaire de l'assemblage de combustible nucléaire 18 augmente. Si un crayon de combustible nucléaire présente une perte d'étanchéité, des produits de fission gazeux s'échappent dudit crayon de l'assemblage de combustible nucléaire 18, remontent dans l'alvéole 24 et sont collectés par le couvercle 34.

Les gaz piégés sous le couvercle 34 sont conduits au dispositif de mesure 58, des mesures sont réalisées sur ces gaz par le dispositif de mesure 58, et une analyse des signaux de mesure est réalisée par le calculateur 60.

Les résultats d'analyse sont restitués à un utilisateur par l'intermédiaire du dispositif d'interface homme-machine 62.

Le dispositif de contrôle d'étanchéité 30 est ensuite déplacé vers un alvéole 24 contenant l'assemblage de combustible nucléaire 18 suivant à contrôler.

Le procédé comprend de préférence la réalisation de contrôles d'étanchéités successivement sur plusieurs assemblages de combustible nucléaire 18 situés dans des alvéoles 24 respectifs du ou de plusieurs racks de stockage 22, en déplaçant le dispositif de contrôle d'étanchéité 30 d'un alvéole 24 à un autre pour réaliser le contrôle d'étanchéité suivant.

Ainsi, plusieurs contrôles d'étanchéité successifs peuvent être réalisés sur plusieurs assemblages de combustible nucléaire 18 reçus dans des alvéoles 24 respectifs sans avoir à manutentionner les assemblages de combustible nucléaire 18.

En outre, les assemblages de combustible nucléaire 18 déchargés d'un réacteur nucléaire 4 sont généralement stockés dans des racks de stockage 22. Ainsi, le contrôle d'étanchéité des assemblages de combustible nucléaire 18 peut être réalisé sans manipulation supplémentaire des assemblages de combustible nucléaire 18 par rapport aux manipulations normales, ce qui représente un gain de temps considérable.

En option, le contrôle d'étanchéité peut être réalisé à la fin du déchargement des assemblages de combustible nucléaire 18 en provenance du réacteur nucléaire 4.

Le prolongateur 40 permet de prolonger l'alvéole 24 au-dessus du niveau des alvéoles 24 adjacents, de manière à pouvoir positionner le couvercle 34 de façon efficace pour piéger des éventuels produits de fission gazeux émis par l'assemblage de combustible nucléaire 18 présent dans l'alvéole 24.

En particulier, le couvercle 34 peut coiffer le prolongateur 40 avec le bord inférieur 34A du couvercle 34 situé à un niveau inférieur à celui du bord supérieur 40A du prolongateur 40, ce qui prévient la sortie de gaz du couvercle 34, au moins tant que la pression des gaz sous le couvercle 34 est inférieure à la pression de l'eau au niveau du bord inférieur 34A du couvercle 34.

Certains assemblages de combustible nucléaire 18 dits « froids » présentent une puissance résiduelle plus faible que d'autres. Si la puissance résiduelle est trop faible, la seule fermeture de l'extrémité supérieure 24A d'un alvéole 24 dans lequel l'assemblage de combustible nucléaire 18 est stocké du fait de l'installation de l'ensemble de collecte 32 à l'extrémité supérieure 24A de l'alvéole 24 peut être insuffisante pour un ressuage satisfaisant.

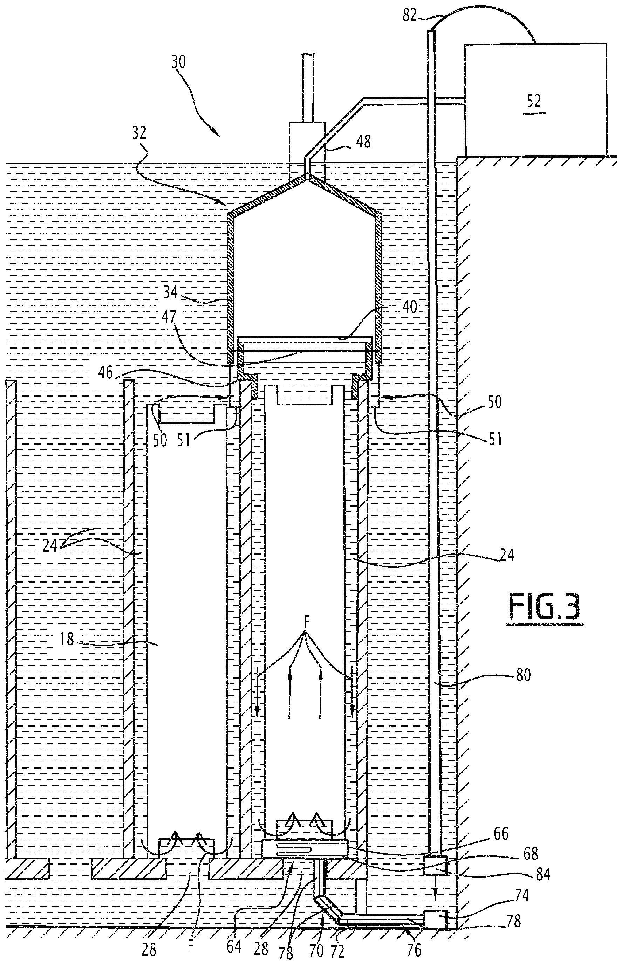

En option, comme illustré sur la Figure 3, le dispositif de contrôle d'étanchéité 30 comprend une unité de chauffage 64 configurée pour être insérée au fond d'un alvéole 24 et pour chauffer l'eau contenue dans l'alvéole 24.

L'unité de chauffage 64 est configurée pour supporter un assemblage de combustible nucléaire 18 stocké dans l'alvéole 24. L'unité de chauffage 64 est ainsi dimensionnée pour supporter le poids d'un assemblage de combustible nucléaire 18 stocké dans l'alvéole 24.

L'unité de chauffage 64 est prévue avec une hauteur aussi réduite que possible pour éviter un dépassement de l'assemblage de combustible nucléaire 18 hors de l'alvéole 24.

L'unité de chauffage 64 comprend par exemple une boîte 66 parallélépipédique. La boîte 66 est par exemple formée d'un ensemble mécano soudé réalisé en acier inoxydable, par exemple en acier AISI 304, 304L, 316 ou 316L.

La boîte 66 possède des passages de circulation d'eau pour permettre la circulation de l'eau dans l'alvéole 24 verticalement du bas vers le haut lorsqu'aucun cycle de ressuage n'est mis en œuvre dans l'alvéole 24.

L'unité de chauffage 64 comprend une source de chaleur 68 pour chauffer l'eau contenue dans l'alvéole 24 pendant un cycle de ressuage. La source de chaleur 68 est ici une résistance électrique chauffante contenue dans la boîte 66. La source de chaleur 68 est située dans la boîte 66.

L'unité de chauffage 64 comprend une alimentation électrique 70 pour l'alimentation en électricité de la source de chaleur 68.

L'alimentation électrique 70 comprend une batterie électrique logée dans l'unité de chauffage 64 et/ou un câble d'alimentation électrique pour relier l'unité de chauffage 64 à une source d'alimentation électrique distante.

L'alimentation électrique 70 comprend ici un câble d'alimentation 72 qui est prévu pour sortir par l'ouverture inférieure 28 de l'alvéole 24 lorsque l'unité de chauffage 64 est insérée dans l'alvéole 24 par l'ouverture supérieure 26 de l'alvéole 24. Le câble d'alimentation 72 est muni d'un connecteur électrique 74 à son extrémité opposée à l'unité de chauffage 64.

De préférence, l'unité de chauffage 64 comprend une chaîne porte-câble 76 portant le câble d'alimentation 72. Du fait de son poids et de sa flexibilité, la chaîne porte-câble 76 facilite le passage du câble à travers l'ouverture inférieure 28 de l'alvéole 24 lors de l'insertion de l'unité de chauffage 64 dans l'alvéole 24.

Dans un mode de réalisation particulier, la chaîne porte-câble 76 est configurée de manière qu'une fois l'unité de chauffage 64 insérée au fond de l'alvéole 24, le connecteur électrique 74 repose sur le fond de la piscine de stockage 8.

De préférence, la chaîne porte-câble 76 comprend des segments 78 articulés entre eux de manière que le connecteur électrique 74 se déporte latéralement d'un côté déterminé par rapport à l'unité de chauffage 64 lorsque l'unité de chauffage 64 est rapprochée du sol.

Ainsi, lorsque l'unité de chauffage 64 est descendue dans un alvéole 24, la chaîne porte-câble 76 passe à travers l'ouverture inférieure 28 de l'alvéole 24, puis le connecteur électrique 74 se pose sur le fond de la piscine de stockage 8, puis se décale latéralement lorsqu'on poursuit la descente de l'unité de chauffage 64.

De préférence, en fonctionnement, l'unité de chauffage 64 est insérée dans un alvéole 24 périphérique du rack de stockage 22 de manière que le connecteur électrique 74 se décale sur le côté du rack de stockage 22 et soit accessible sur le côté du rack de stockage 22, comme illustré sur la Figure 3.

Le côté sur lequel le connecteur électrique 74 se décale est fonction de l'orientation de l'unité de chauffage 64. Avantageusement, cette dernière comprend une marque de détrompage permettant de l'orienter correctement lors de son insertion dans l'alvéole 24 périphérique, de manière à s'assurer que le connecteur électrique 74 sortira sur le côté du rack de stockage 22 et sera accessible depuis le bord de la piscine de stockage 8.

Pour le raccordement à une source électrique distante, le dispositif de contrôle d'étanchéité 30 comprend par exemple une perche de raccordement 80 portant un câble de raccordement 82 électrique muni à son extrémité inférieure d'un connecteur électrique 84 complémentaire du connecteur électrique 74 du câble d'alimentation 72.

Le fonctionnement du dispositif de ressuage est similaire à celui du dispositif de ressuage de la Figure 2, à ceci près que de la chaleur pour le chauffage de l'assemblage de combustible nucléaire 18 est apportée par l'unité de chauffage 64.

Pour l'installation, l'unité de chauffage 64 est d'abord installée au fond de l'alvéole 24, puis l'assemblage de combustible nucléaire 18 est inséré dans l'alvéole 24 de manière à reposer sur l'unité de chauffage 64, puis l'ensemble de collecte 32 est placé en haut de l'alvéole 24. L'unité de chauffage 64 est éventuellement reliée à une source d'alimentation électrique par l'intermédiaire de son câble d'alimentation 72 à l'aide d'une perche de raccordement 80.

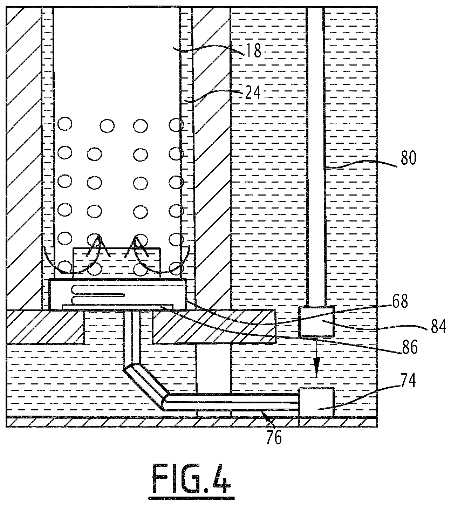

Dans la variante illustrée sur la Figure 4, l'unité de chauffage 64 comprend en outre un dispositif de bullage 86 pour générer des bulles de gaz, par exemple des bulles d'air, en vue d'améliorer la collecte des produits de fission potentiellement collés sur la gaine tubulaire des crayons de combustible nucléaire. Le dispositif de bullage 86 peut être mis en œuvre indépendamment de l'unité de chauffage 64, en particulier dans le cas du contrôle d'étanchéité pour des assemblages de combustible nucléaire 18 présentant une puissance résiduelle suffisante.

En fonctionnement, les bulles générées par le dispositif de bullage 86 remontent le long de l'assemblage de combustible nucléaire 18 et entraînent des bulles de produits de fission gazeux qui seraient collées sur l'assemblage de combustible nucléaire 18, en particulier sur des crayons de combustible nucléaire ou des grilles de l'assemblage de combustible nucléaire 18. En d'autres termes, le dispositif de bullage 86 est configuré pour décoller des bulles de produits de fission de l'assemblage de combustible nucléaire 18. Ceci améliore donc l'efficacité de la détection de pertes d'étanchéité.

Le dispositif de bullage 86 présente par exemple une forme de treillis ou de couronne(s) ou, de tore(s) de faible hauteur permettant de générer des bulles sur tout ou partie de la surface du dispositif de bullage 86 tout en ménageant des évidements pour la circulation de l'eau dans l'alvéole 24 lorsque l'alvéole 24 n'est pas fermée par un ensemble de collecte 32.

Pour la génération de bulles, le dispositif de bullage 86 est par exemple relié à une source de gaz (non représentée). Il est possible d'utiliser la source de gaz sous pression 54 prévue pour le remplissage du couvercle 34.

Pour cette liaison, l'unité de chauffage 64 comprend par exemple un conduit d'alimentation porté par la chaîne porte-câble 76, le connecteur électrique 74 étant configuré en outre pour une connexion fluidique de ce conduit d'alimentation à un conduit de raccordement porté par la perche de raccordement 80 et relié à la source de gaz.

Grâce à l'invention, il est possible de contrôler l'étanchéité d'assemblages de combustible nucléaire 18 déchargés d'un réacteur nucléaire 4 par ressuage de manière simple, fiable et rapide.

Le contrôle d'étanchéité est effectué directement dans le rack de stockage 22 dans lequel sont stockés les assemblages de combustible nucléaire 18 déchargés du réacteur nucléaire 4.

Il n'est pas nécessaire de disposer d'une cellule de ressuage fixe ou mobile dédiée séparée du rack de stockage 22, ni de manipuler les assemblages de combustible nucléaire 18 stockés pour contrôler des assemblages de combustible nucléaire 18 possédant une puissance résiduelle suffisante.

Le contrôle d'étanchéité est en outre effectué hors du réacteur nucléaire 4, ce qui limite les opérations de manutention au-dessus du réacteur nucléaire 4 lui-même et limite donc les risques inhérents à de telles interventions.

L'invention permet en outre d'effectuer le contrôle d'étanchéité d'assemblages de combustible nucléaire 18 « froids » dans un alvéole 24 équipé d'une unité de chauffage 64.

Le dispositif de contrôle d'étanchéité 30 est léger, peu volumineux et facile à installer et à désinstaller. Il permet de raccourcir les délais d'intervention et de réduire les risques d'endommagement des assemblages de combustible nucléaire 18 puisqu'il permet de réduire la manutention des assemblages de combustible nucléaire 18, en particulier lorsque ceux-ci ont une puissance résiduelle suffisante. Le contrôle d'étanchéité avec le dispositif de contrôle d'étanchéité 30 nécessite uniquement le déplacement du dispositif de contrôle d'étanchéité 30 d'un alvéole 24 à un autre, permettant ainsi un gain de temps non négligeable lors du contrôle successif de plusieurs assemblages de combustible nucléaire 18.

Le dispositif de contrôle d'étanchéité 30 utilise le rack de stockage 22 déjà présent dans la piscine de stockage 8. Ainsi, il n'est pas nécessaire de prévoir des points d'ancrage supplémentaires dans la piscine de stockage 8, comme c'est le cas par exemple pour une cellule de ressuage fixe ou mobile dédiée. Il n'est pas non plus nécessaire de prévoir des études lourdes et coûteuses pour justifier son comportement en cas d'accident auprès des autorités de sûreté nucléaire.

Les risques de contamination du dispositif de contrôle d'étanchéité 30 par contact direct avec un assemblage de combustible nucléaire 18 sont écartés.

Le dispositif de contrôle d'étanchéité 30 permet la réalisation de plusieurs contrôles d'étanchéité successifs à l'aide d'un même ensemble de collecte 32 sans avoir à réaliser de rinçage ni de décontamination entre deux contrôles d'étanchéité successifs.

L'invention n'est pas limitée aux exemples de réalisation décrits ci-dessus. Des variantes sont envisageables.

Le dispositif de contrôle d'étanchéité 30 comprend ici un seul ensemble de collecte 32. En variante, le dispositif de contrôle d'étanchéité 30 comprend plusieurs ensembles de collecte 32. Ceci permet de réaliser plusieurs contrôle d'étanchéité sur plusieurs assemblages de combustible nucléaire 18 respectifs en parallèle ou d'effectuer un contrôle d'étanchéité sur un assemblage de combustible nucléaire 18 à l'aide d'un ensemble de collecte 32 pendant la préparation d'un autre contrôle d'étanchéité sur un autre assemblage de combustible nucléaire 18 à l'aide d'un autre ensemble de collecte 32.

Lorsque le dispositif de contrôle d'étanchéité 30 comprend plusieurs ensembles de collecte 32, il est possible de prévoir un ensemble de commande 52 commun à plusieurs ensembles de collecte 32 et raccordable à l'un de ces ensembles de collecte 32 à la fois. L'ensemble de commande 52 commun est alors raccordé successivement aux différents ensembles de collecte 32.

Dans les exemples illustrés, le prolongateur 40 prend appui sur l'alvéole 24 sur lequel l'ensemble de collecte 32 est installé. En option ou en variante, le prolongateur 40 est configuré pour prendre appui sur un ou plusieurs alvéoles 24 adjacent(s) à l'alvéole 24 sur lequel l'ensemble de collecte 32 est installé. Ceci permet de répartir le poids de l'ensemble de collecte 32 sur plusieurs alvéoles 24.

Dans les exemples illustrés, parmi le couvercle 34 et le prolongateur 40, seul ce dernier prend appui sur l'alvéole 24. En variante ou en option, le couvercle 34 prend appui sur l'alvéole 24 sur lequel l'ensemble de collecte 32 est installé et/ou sur un ou plusieurs alvéoles 24 adjacent(s) à l'alvéole 24 sur lequel l'ensemble de collecte 32 est installé.

## Revendications

1. Dispositif de contrôle d'étanchéité pour le contrôle de l'étanchéité d'un assemblage de combustible nucléaire (18) par ressuage, comprenant un ensemble de collecte (32) configuré pour fermer une extrémité supérieure (24A) d'un alvéole (24) d'un rack de stockage (22) pour le stockage d'assemblage(s) de combustible nucléaire (18) déchargé(s) d'un réacteur nucléaire (4), de manière à empêcher la sortie d'eau contenue dans l'alvéole (24) par l'extrémité supérieure (24A) de l'alvéole (24), et pour collecter des produits contenant d'éventuels produits de fission, relâchés par un assemblage de combustible nucléaire (18) contenu dans l'alvéole (24), **caractérisé en ce que** l'ensemble de collecte (32) comprend un prolongateur (40) tubulaire configuré pour être disposé à l'extrémité supérieure (24A) de l'alvéole (24) en prolongeant l'alvéole (24) vers le haut, et un couvercle (34) en forme de cloche configuré pour coiffer le prolongateur (40).

2. Dispositif de contrôle d'étanchéité selon la revendication 1, dans lequel un bord inférieur (34A) du couvercle (34) entoure le prolongateur (40) en étant situé à un niveau plus bas que celui d'un bord supérieur (40A) du prolongateur (40).

3. Dispositif de contrôle d'étanchéité selon la revendication 1 ou 2, dans lequel le prolongateur (40) et le couvercle (34) sont solidaires l'un de l'autre de manière à pouvoir être manutentionnés conjointement.

4. Dispositif de contrôle d'étanchéité selon l'une quelconque des revendications précédentes, dans lequel le couvercle (34) présente une forme pyramidale ou conique convergeant vers le haut.

6. Dispositif de contrôle d'étanchéité selon l'une quelconque des revendications précédentes , dans lequel le couvercle (34) comprend au moins un piquage (36) pour l'amenée d'un gaz sous pression sous le couvercle (34)

6. Dispositif de contrôle d'étanchéité selon l'une quelconque des revendications précédentes, comprenant un ensemble de commande (52) séparé de l'ensemble de collecte (32) et relié à l'ensemble de collecte (32), l'ensemble de commande (52) étant configuré pour l'analyse des produits collectés par l'ensemble de collecte (32) pour détecter la présence éventuelle de produits de fission.

7. Dispositif de contrôle d'étanchéité selon l'une quelconque des revendications précédentes, comprenant une unité de chauffage (64) configurée pour être disposée au fond d'un alvéole (24) et pour supporter un assemblage de combustible nucléaire (18) reçu dans l'alvéole (24).

8. Dispositif de contrôle d'étanchéité selon l'une quelconque des revendications précédentes, comprenant un dispositif de bullage (86) configuré pour décoller des bulles de produits de fission de l'assemblage de combustible nucléaire (18)

9. Procédé de contrôle de l'étanchéité d'un assemblage de combustible nucléaire (18) par ressuage, le contrôle d'étanchéité étant réalisé pendant que l'assemblage de combustible nucléaire (18) est stocké dans un alvéole (24) d'un rack de stockage (22) d'assemblages de combustible nucléaire (18) déchargés d'un réacteur nucléaire (4), comprenant la collecte de produits à l'aide d'un ensemble de collecte (32) configuré pour fermer une extrémité supérieure (24A) de l'alvéole (24) de manière à empêcher la sortie d'eau contenue dans l'alvéole (24) par l'extrémité supérieure (24A) de l'alvéole (24), avec la disposition à l'extrémité supérieure (24A) de l'alvéole (24) d'un prolongateur (40) tubulaire de l'ensemble de collecte (32) pour prolonger l'alvéole (24) vers le haut, le prolongateur (40) étant coiffé par un couvercle (34) en forme de cloche de l'ensemble de collecte (32), et l'analyse des produits collectés pour détecter d'éventuels produits de fission relâchés par l'assemblage de combustible nucléaire (18) contenu dans l'alvéole (24).

10. Procédé de contrôle d'étanchéité selon la revendication 9, comprenant le contrôle de l'étanchéité de plusieurs assemblages de combustible nucléaire (18) disposés dans des alvéoles (24) respectifs du même rack de stockage (22), en déplaçant l'ensemble de collecte (32) successivement d'un des alvéoles (24) à l'autre pour le contrôle de l'étanchéité des assemblages de combustible nucléaire (18).

11. Procédé de contrôle d'étanchéité selon la revendication 9 ou 10, comprenant le chauffage d'un assemblage de combustible nucléaire (18) reçu dans un alvéole (24).

12. Procédé de contrôle d'étanchéité selon la revendication 11, dans lequel le chauffage est réalisé à l'aide d'une unité de chauffage (64) rapportée au fond de l'alvéole (24).

## Patentansprüche

1. Dichtigkeitsprüfungsvorrichtung zur Prüfung der Dichtigkeit eines Kernbrennstoffelements (18) mittels Sippings, welche aufweist eine Sammelanordnung (32), welche eingerichtet ist, um ein oberes Ende (24A) einer Zelle (24) eines Lagergestells (22) für das Lagern eines/von Kernbrennstoffelements/en (18), welche/s aus einem Kernreaktor (4) abgegeben wird/werden, zu verschließen, um das Austreten von Wasser, welches in der Zelle (24) enthalten ist, durch das obere Ende (24A) der Zelle (24) zu verhindern, und um Produkte zu sammeln, welche mögliche Spaltprodukte enthalten, welche von einem in der Zelle (24) enthaltenen Kernbrennstoffelement (18) freigesetzt werden, **dadurch gekennzeichnet, dass** die Sammelanordnung (32) aufweist eine rohrförmige Verlängerung (40), welche eingerichtet ist, um am oberen Ende (24A) der Zelle (24) angeordnet zu sein, unter Verlängern der Zelle (24) nach oben, und eine Abdeckung (34) in Glockenform, welche eingerichtet ist, um die Verlängerung (40) abzudecken.

2. Dichtigkeitsprüfungsvorrichtung gemäß Anspruch 1, wobei ein unterer Rand (34A) der Abdeckung (34) die Verlängerung (40) umgibt, während er auf einem niedrigeren Niveau als dem eines oberen Rands (40A) der Verlängerung (40) angeordnet ist.

3. Dichtigkeitsprüfungsvorrichtung gemäß Anspruch 1 oder 2, wobei die Verlängerung (40) und die Abdeckung (34) miteinander fest verbunden sind, um gemeinsam gehandhabt werden zu können.

4. Dichtigkeitsprüfungsvorrichtung gemäß irgendeinem der vorherigen Ansprüche, wobei die Abdeckung (34) eine nach oben konvergierende pyramidale oder konische Form hat.

6. Dichtigkeitsprüfungsvorrichtung gemäß irgendeinem der vorherigen Ansprüche, wobei die Abdeckung (34) mindestens einen Anschluss (36) für das Zuführen eines Gases unter Druck unter die Abdeckung (34) aufweist.

6. Dichtigkeitsprüfungsvorrichtung gemäß irgendeinem der vorherigen Ansprüche, welche eine Steueranordnung (52) aufweist, welche von der Sammelanordnung (32) getrennt ist und welche mit der Sammelanordnung (32) verbunden ist, wobei die Steueranordnung (52) für die Analyse der Produkte eingerichtet ist, welche mittels der Sammelanordnung (32) gesammelt werden, um das mögliche Vorhandensein von Spaltprodukten zu detektieren.

7. Dichtigkeitsprüfungsvorrichtung gemäß irgendeinem der vorherigen Ansprüche, welche eine Heiz-Einheit (64) aufweist, welche eingerichtet ist, um am Boden einer Zelle (24) angeordnet zu sein, und um ein in der Zelle (24) aufgenommenes Kernbrennstoffelement (18) zu tragen.

8. Dichtigkeitsprüfungsvorrichtung gemäß irgendeinem der vorherigen Ansprüche, welche eine Blasenvorrichtung (86) aufweist, welche eingerichtet ist, um Blasen von Spaltprodukten aus dem Kernbrennstoffelement (18) zu lösen.

9. Verfahren zur Dichtigkeitsprüfung eines Kernbrennstoffelements (18) mittels Sippings, wobei das Verfahren durchgeführt wird, während das Kernbrennstoffelement (18) in einer Zelle (24) eines Lagergestells (22) für Kernbrennstoffelemente (18), welche aus einem Kernreaktor (4) abgegeben werden, gelagert wird, welches aufweist das Sammeln von Produkten mit Hilfe einer Sammelanordnung (32), welche eingerichtet ist, um ein oberes Ende (24A) der Zelle (24) zu verschließen, um das Austreten von Wasser, welches in der Zelle (24) enthalten ist, durch das obere Ende (24A) der Zelle (24) zu verhindern, mit dem Anordnen einer rohrförmigen Verlängerung (40) der Sammelanordnung (32) am oberen Ende (24A) der Zelle (24), um die Zelle (24) nach oben zu verlängern, wobei die Verlängerung (40) mittels einer Abdeckung (34) in Glockenform der Sammelanordnung (32) abgedeckt ist, und das Analysieren der gesammelten Produkte, um mögliche Spaltprodukte zu detektieren, welche von dem in der Zelle (24) enthaltenen Kernbrennstoffelement (18) freigesetzt werden.

10. Verfahren zur Dichtigkeitsprüfung gemäß Anspruch 9, welches aufweist das Dichtigkeitsprüfen von mehreren Kernbrennstoffelementen (18), welche in jeweiligen Zellen (24) desselben Lagergestells (22) angeordnet sind, während des sukzessiven Bewegens der Sammelanordnung (32) von einer Zelle (24) zur anderen für die Dichtigkeitsprüfung der Kernbrennstoffelemente (18).

11. Verfahren zur Dichtigkeitsprüfung gemäß Anspruch 9 oder 10, welches das Erwärmen eines in einer Zelle (24) aufgenommenen Kernbrennstoffelements (18) aufweist.

12. Verfahren zur Dichtigkeitsprüfung gemäß Anspruch 11, wobei das Erwärmen mit Hilfe einer Heiz-Einheit (64) durchgeführt wird, welche am Boden der Zelle (24) angeordnet ist.

## Claims

1. A leakage testing device for testing leakage of a nuclear fuel assembly (18) by sipping, comprising a collection assembly (32) that is configured to close an upper end (24A) of a cell (24) of a storage rack (22) for storing nuclear fuel assembly/ies (18) discharged from a nuclear reactor (4), so as to prevent water contained in the cell (24) from escaping via the upper end (24A) of the cell (24), and to collect products containing possible fission products released by a nuclear fuel assembly (18) contained in the cell (24), **characterized in that** the collection assembly (32) comprises a tube extender (40) configured to be arranged at the upper end (24A) of the cell (24) while extending the cell (24) upward, a bell-shaped cover (34) configured to cap the extender (40) .

2. The leakage testing device according to claim 1, wherein a lower edge (34A) of the cover (34) surrounds the extender (40) while being located at a lower level than that of an upper edge (40A) of the extender (40).

3. The leakage testing device according to claim 1 or 2, wherein the extender (40) and the cover (34) are secured to one another so as to be able to be handled jointly.

4. The leakage testing device according to any one of the preceding claims, wherein the cover (34) has a pyramidal or conical shape converging upward.

5. The leakage testing device according to any one of the preceding claims, wherein the cover (34) comprises at least one tap (36) to feed a pressurized gas below the cover (34).

6. The leakage testing device according to any one of the preceding claims, comprising a control assembly (52) separate from the collection assembly (32) and connected to the collection assembly (32), the control assembly (52) being configured for the analysis of products collected by the collection assembly (32) to detect the possible presence of fission products.

7. The leakage testing device according to any one of the preceding claims, a heating unit (64) configured to be arranged in the bottom of a cell (24) and to support a nuclear fuel assembly (18) received in the cell (24).

8. The leakage testing device according to any one of the preceding claims, comprising a bubbling device (86) configured to loosen fission product bubbles from the nuclear fuel assembly (18).

9. A method for testing leakage of a nuclear fuel assembly (18) by sipping, the leakage testing being done while the nuclear fuel assembly (18) is stored in a cell (24) of a rack (22) for storing nuclear fuel assemblies (18) discharged from a nuclear reactor (4), comprising the collection of products using a collection assembly (32) configured to close an upper end (24A) of the cell (24) so as to prevent water contained in the cell (24) from escaping via the upper end (24A) of the cell (24), with the arrangement at the upper end (24A) of the cell (24) of a tubular extender (40) of the collection assembly (32) to extend the cell (24) upward, the extender (40) being capped by a bell-shaped cover (34) of the collection assembly (32), and the analysis of collected products to detect possible fission products released by the nuclear fuel assembly (18) contained in the cell (24).

10. The leakage testing method according to claim 9, comprising the testing of leakage of several nuclear fuel assemblies (18) arranged in the respective cells (24) of the same storage rack (22), by moving the collection assembly (32) successively from one of the cells (24) to the other in order to test leakage of the nuclear fuel assemblies (18).

11. The leakage testing method according to claim 9 or 10, comprising the heating of a nuclear fuel assembly (18) received in a cell (24).

12. The leakage testing method according to claim 11, wherein the heating is done using a heating unit (64) attached at the bottom of the cell (24).
